(19)

Europäisches
Patentamt
European
Patent Office
Office européen
des brevets

(11)  **EP 3 528 212 A1**

(12)  **EUROPEAN PATENT APPLICATION**
published in accordance with Art. 153(4) EPC

(43) Date of publication:
**21.08.2019  Bulletin 2019/34**

(21) Application number: **17859745.6**

(22) Date of filing: **12.10.2017**

(51) Int Cl.:
*G06T 19/00* (2011.01)          *G06T 19/20* (2011.01)
*G06T 15/10* (2011.01)

(86) International application number:
**PCT/KR2017/011262**

(87) International publication number:
**WO 2018/070810 (19.04.2018 Gazette 2018/16)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority:  **12.10.2016  US 201662406997 P**

(71) Applicant: **Samsung Electronics Co., Ltd.
Suwon-si, Gyeonggi-do 16677 (KR)**

(72) Inventors:
• **CHOI, Byeong-Doo**
**Suwon-si**
**Gyeonggi-do 16677 (KR)**
• **YIP, Eric**
**Suwon-si**
**Gyeonggi-do 16677 (KR)**
• **SONG, Jae-Yeon**
**Suwon-si**
**Gyeonggi-do 16677 (KR)**

(74) Representative: **Nederlandsch Octrooibureau
P.O. Box 29720
2502 LS The Hague (NL)**

(54)  **METHOD AND APPARATUS FOR PROCESSING VIRTUAL REALITY IMAGE**

(57)      A method for processing a virtual reality (VR) image according to one aspect of the present disclosure may comprise the steps of: selecting a viewport; transmitting information related to the selected viewport; receiving at least one track related to a VR content overlapping the selected viewport; acquiring metadata from the received at least one track; and rendering the selected viewport from the received at least one track on the basis of the acquired metadata and the selected viewport.

Illustration of Equirectangular projection (ERP)

FIG.10

EP 3 528 212 A1

**Description**

[Technical Field]

The disclosure relates to a method and apparatus of processing adaptive virtual reality (VR) images.

[Background Art]

The Internet is evolving from the human-centered connection network by which humans generate and consume information to the Internet of Things (IoT) network by which information is communicated and processed between things or other distributed components. The Internet of Everything (IoE) technology may be an example of a combination of the Big data processing technology and the IoT technology through, e.g., a connection with a cloud server.

To implement the IoT, technology elements, such as a sensing technology, wired/wireless communication and network infra, service interface technology, and a security technology, are required. There is a recent ongoing research for inter-object connection technologies, such as the sensor network, Machine-to-Machine (M2M), or the Machine-Type Communication (MTC).

In the IoT environment may be offered intelligent Internet Technology (IT) services that collect and analyze the data generated by the things connected with one another to create human life a new value. The IoT may have various applications, such as the smart home, smart building, smart city, smart car or connected car, smart grid, health-care, or smart appliance industry, or state-of-art medical services, through conversion or integration of existing IT technologies and various industries. Meanwhile, contents for implementing the IoT are also evolving. In other words, as black-and-white content shifts to color content, and high definition (HD), ultra-high definition (UHD), and recent high dynamic range (HDR) content are standardized and spread, research is underway for virtual reality (VR) content that may be played by VR apparatuses, such as the Oculus or Samsung Gear VR. The VR system monitors a user and allows the user to enter a feedback through a content display device or processing unit using a certain type of controller. The device or unit processes the entered feedback to adjust the content to fit the same, enabling interactions.

A VR echo system may include basic components, e.g., a head mounted display (HMD), wireless/mobile VR, TVs, cave automatic virtual environments (CA VEs), peripherals, and haptics (other controllers for providing inputs to the VR), a content capture (camera or video stitching), a content studio (game, stream, movie, news, and documentary), industrial applications (education, healthcare, real property, construction, travel), and productive tools and services (3D engines, processing power), app store (for VR media content).

Capturing, encoding, and transmission of 360-degree image content which are performed to configure VR content encounter myriad challenges without implementing a post-high efficiency video coding (HEVC) codec that may be designed for three-dimensional (3D) 360-degree content.

Thus, a need exists for a scheme capable of configuration and consumption of VR content in a more efficient way.

[Detailed Description of the Invention]

[Technical Problem]

According to the disclosure, there is provided a method and apparatus of processing virtual reality (VR) images.

According to the disclosure, there is proposed a method and apparatus for configuring pieces of information for rendering images constituting VR content free of distortion and signaling with the information.

According to the disclosure, there is proposed a method and apparatus for playing VR content based on the signaling information of the VR content on the receive side.

[Technical Solution]

According to an aspect of the disclosure, a method of processing a virtual reality image may comprise selecting a viewport, transmitting information related to the selected viewport, receiving at least one track related to virtual reality (VR) content overlapping the selected viewport, obtaining metadata from the at least one track received, and rendering the selected viewport from the at least one track received, based on the received metadata and the selected viewport.

Further, the information related to the viewport may include viewpoint information and field-of-view (FoV) information, the viewpoint information may include a center yaw angle and a center pitch angle related to spherical coordinates, and the FoV information may include a width of the yaw angle and a width of the pitch angle.

Further, the center yaw angle may be not less than -180 degrees and not more than 180 degrees, the pitch angle may be not less than -90 degrees and not more than 90 degrees, the width of the yaw angle may be not less than 0 degrees and not more than 360 degrees, and the width of the pitch angle may be not less than 0 degrees and not more than 180 degrees.

Further, the metadata may include at least one of whether the at least one track is stitched, an entire coverage range of the at least one track, whether the at least one track is a whole or part of the 360-degree image, a horizontal active range of the at least one track, a vertical active range of the at least one track, whether the at least one track is one by a platonic solid projection method, a type of the regular polyhedron, and FoV information of the at least one track. The metadata may include information regarding dependency between one or more tracks and the at least one track overlapping the viewport, and wherein

The at least one track may include the entire geometry of the virtual reality content or only part of the entire geometry of the virtual reality content. The at least one track may be generated by an equirectangular projection (ERP) method or a platonic solid projection method. The number of the at least one track may be two or more, may not overlap each other, and may have dependency therebetween.

According to another aspect of the disclosure, an apparatus of processing a virtual reality image may comprise a transceiver, a memory configured to store a virtual reality image processing module, and a controller connected with the transceiver and the memory to execute the virtual reality image processing module, wherein the controller may be configured to select a viewport, transmitting information related to the selected viewport, receive at least one track related to virtual reality (VR) content overlapping the selected viewport, obtain metadata from the at least one track received, and render the selected viewport from the at least one track received, based on the received metadata and the selected viewport.

Other aspects, advantages, and core features of the present disclosure will be apparent to one of ordinary skill in the art from the following detailed description taken in conjunction with the accompanying drawings and disclosing preferred embodiments of the present disclosure.

Prior to going into the detailed description of the disclosure, it might be effective to define particular words and phrases as used herein. As used herein, the words "include" and "comprise" and their derivatives may mean doing so without any limitations. As used herein, the term "or" may mean "and/or." As used herein, the phrase "associated with" and "associated therewith" and their derivatives may mean "include," "be included within," "interconnect with," "contain," "be contained within," "connect to or with," "couple to or with," "be communicable with," "cooperate with," "interleave," "juxtapose," "be proximate to, "be bound to or with, "have, or "have a property of." As used herein, the word "controller" may mean any device, system, or part thereof controlling at least one operation. The device may be implemented in hardware, firmware, software, or some combinations of at least two thereof. It should be noted that functions, whatever particular controller is associated therewith, may be concentrated or distributed or implemented locally or remotely. It should be appreciated by one of ordinary skill in the art that the definitions of particular terms or phrases as used herein may be adopted for existing or future in many cases or even though not in most cases.

[Brief Description of Drawings]

FIG. 1 is a view illustrating an example configuration of a computer system in which a method of processing adaptive virtual reality images is implemented according to the disclosure;

FIGS. 2a, 2b, and 2c are views illustrating example ERP images according to the disclosure;

FIGS. 3a, 3b, and 3c are views illustrating example viewport images according to the disclosure;

FIG. 4 is a view illustrating an example method of mapping a viewport image and an ERP image;

FIG. 5 is a view illustrating an example method of mapping a viewport image and an ERP image;

FIGS. 6a, 6b, and 6c are views illustrating examples of zagging, blur, and aliasing shown in a viewport image generated;

FIGS. 7 and 8 are views illustrating an example method of mapping a viewport image and an ERP image according to the disclosure;

FIG. 9(a) is a view illustrating a viewport image, and FIG. 9(b) is a view illustrating a yaw and a pitch in a spherical coordinate system;

FIG. 10 is a view illustrating an example method of mapping coordinates in a spherical coordinate system to coordinates in an ERP image;

FIG. 11 is a view illustrating an example method of obtaining a 360-degree image using a polyhedron according to the disclosure; FIG. 11(a) is a two-dimensional exploded view per polyhedron, FIG. 11(b) is an example two-dimensional exploded view of a cube, and FIG. 11(c) is an example two-dimensional exploded view of an icosahedron;

FIG. 12 is a view illustrating tracking a viewpoint related to rendering a viewport in an ERP image according to the disclosure;

FIG. 13 is a view illustrating tracking a viewpoint related to rendering a viewport in cubical projection according to the disclosure;

FIG. 14 illustrates camera devices for capturing a 360-degree image;

FIG. 15 is a view illustrating an example of a capturing range depending on the shape of camera devices capturing a 360-degree image; FIG. 15(a) illustrates a capturing range by a tetrahedral camera device, FIG. 15(b) illustrates a capturing range by a cube-shaped camera device, and FIG. 15(c) illustrates a capturing range by a dodecahedral camera device;

FIG. 16 is a view illustrating an example method of projecting from a spherical image;

FIG. 17 is a view illustrating an example method of cubic projection; and

FIG. 18 is a view illustrating an example method of octahedron projection.

[Mode for Carrying out the Invention]

Hereinafter, embodiments of the present disclosure are described in detail with reference to the accompanying drawings. The same reference numerals are used to refer to same elements throughout the drawings. When determined to make the subject matter of the present disclosure unclear, the detailed of the known functions or configurations may be skipped. The terms as used herein are defined considering the functions in the present disclosure and may be replaced with other terms according to the intention or practice of the user or operator. Therefore, the terms should be defined based on the overall disclosure.

Various changes may be made to the present invention, and the present invention may come with a diversity of embodiments. Some embodiments of the present invention are shown and described in connection with the drawings. However, it should be appreciated that the present invention is not limited to the embodiments, and all changes and/or equivalents or replacements thereto also belong to the scope of the present invention.

As used herein, the singular forms "a," "an," and "the" are intended to include the plural forms as well, unless the context clearly indicates otherwise. Accordingly, as an example, a "component surface" includes one or more component surfaces.

The terms coming with ordinal numbers such as 'first' and 'second' may be used to denote various components, but the components are not limited by the terms. The terms are used only to distinguish one component from another. For example, a first component may be denoted a second component, and vice versa without departing from the scope of the present disclosure. The term "and/or" may denote a combination(s) of a plurality of related items as listed or any of the items.

The terms as used herein are provided merely to describe some embodiments thereof, but not to limit the disclosure. It is to be understood that the singular forms "a," "an," and "the" include plural references unless the context clearly dictates otherwise. It will be further understood that the terms "comprise" and/or "have," when used in this specification, specify the presence of stated features, integers, steps, operations, elements, and/or components, but do not preclude the presence or addition of one or more other features, integers, steps, operations, elements, components, and/or groups thereof.

Unless otherwise defined in connection with embodiments of the present disclosure, all terms including technical and scientific terms used herein have the same meaning as commonly understood by one of ordinary skill in the art to which the embodiments of the present disclosure belong. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

According to an embodiment of the present disclosure, an electronic device as disclosed herein may include a communication function. For example, the electronic device may be a smartphone, a tablet PC, a personal computer (PC), a mobile phone, a video phone, an e-book reader, a desktop PC, a laptop PC, a netbook PC, a personal digital assistant (PDA), a portable multimedia player (PMP), an MP3 player, a mobile medical device, a camera, a wearable device (e.g., a head-mounted device (HMD)), electronic clothes, an electronic bracelet, an electronic necklace, an electronic appcessory, an electronic tattoo, or a smart watch.

According to various embodiments of the disclosure, the electronic device may be a smart home appliance with a communication function. For example, the smart home appliance may be a television, a digital video disk (DVD) player, an audio player, a refrigerator, an air conditioner, a vacuum cleaner, an oven, a microwave oven, a washer, a drier, an air cleaner, a set-top box, a TV box (e.g., Samsung HomeSync™, Apple TV™, or Google TV™), a gaming console, an electronic dictionary, a camcorder, or an electronic picture frame.

According to various embodiments of the disclosure, the electronic device may be a medical device (e.g., magnetic resource angiography (MRA) device, a magnetic resource imaging (MRI) device, a computed tomography (CT) device, an imaging device, or an ultrasonic device), a navigation device, a global positioning system (GPS) receiver, an event data recorder (EDR), a flight data recorder (FDR), an automotive infotainment device, an sailing electronic device (e.g., a sailing navigation device, a gyroscope, or a compass), an aviation electronic device, a security device, or a robot for home or industry.

According to various embodiments of the disclosure, the electronic device may be a piece of furniture with a communication function, part of a building/structure, an electronic board, an electronic signature receiving device, a projector, or various measurement devices (e.g., devices for measuring water, electricity, gas, or electromagnetic waves).

According to various embodiments of the disclosure, an electronic device may be a combination of the above-listed devices. It should be appreciated by one of ordinary skill in the art that the electronic device is not limited to the above-described devices.

According to various embodiments of the disclosure, the device for transmitting and receiving VR content may be, e.g., an electronic device.

The terms as used herein are defined as follows. Image may be a video or still image. Image content may include various multimedia content including an audio or subtitle, but not alone a video or still image. VR content includes image content that provides an image as a 360-degree image or three-dimensional (3D) image. Media file format may be a media file format that follows various media-related standards, such as an international organization for standardization (ISO)-based media file format (ISOBMFF). Projection means a process for projecting a spherical image for representing, e.g., a 360-degree image to a planar surface or an image frame obtained as per a result of the process. Mapping means a process for mapping image data on the planar surface by projection to a two-dimensional (2D) planar surface or an image frame obtained as per a result of the process. Omnidirectional media includes an image or video that may be rendered as per the user's viewport or the direction in which the user's head moves, e.g., when the user uses an HMD and/or its related audio. The viewport may be denoted field of view (FOV), meaning an area of an image viewed by the user at a certain viewpoint (here, the area of image may be the area of the spherical image).

Hereinafter, preferred embodiments of the present invention are described in detail with reference to the accompanying drawings.

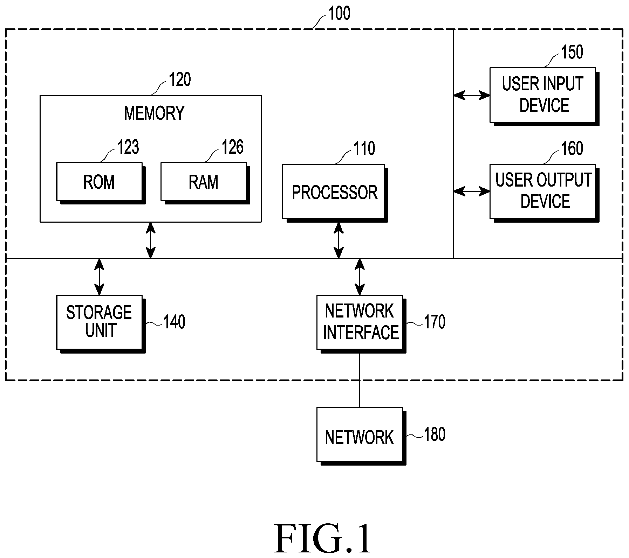

FIG. 1 is a view illustrating an example configuration of a computer system in which a method of processing adaptive virtual reality images is implemented according to the present invention.

Meanwhile, the method of processing adaptive virtual reality images may be implemented in a computer system or recorded in a recording medium. Referring to FIG. 1, the computer system may include at least one or more processors 110 and a memory 120.

The processor 110 may be a central processing unit (CPU) or a semiconductor device processing commands stored in the memory 120.

The processor 110 may be a controller to control all the operations of the computer system 100. The controller may execute the operations of the computer system 100 by reading and running the programming code out of the memory 120.

The computer system 100 may include a user input device 150, a data communication bus 130, a user output device 160, and a storage unit 140. The above-described components may perform data communication through the data communication bus 130.

The computer system may further include a network interface 170 connected to the network 180.

The memory 120 and the storage unit 140 may include various types of volatile or non-volatile storage media. For example, the memory 120 may include a read only memory (ROM) 123 and a random access memory (RAM) 126. The storage unit 140 may include a non-volatile memory, such as a magnetic tape, hard-disk drive (HDD), solid-state drive (SSD), optical data device, and a flash memory.

Accordingly, the method of processing adaptive virtual reality images according to an embodiment of the present invention may be implemented as a method executable on a computer. When the method of processing adaptive virtual reality images according to an embodiment of the present invention is performed on a computer device, computer readable commands may perform the operation method according to the present invention.

Meanwhile, the above-described method of processing adaptive virtual reality images according to the present invention may be implemented in codes that a computer may read out of a recording medium. The computer-readable recording medium includes all types of recording media storing data that can be read out or interpreted by the computer system. For example, the computer-readable recording medium may include a ROM, a RAM, a magnetic tape, a magnetic disc, a flash memory, and an optical data storage device. Further, the computer-readable recording medium may be distributed on the computer system connected via the computer communication network and may be stored and run as codes readable in a distributive manner.

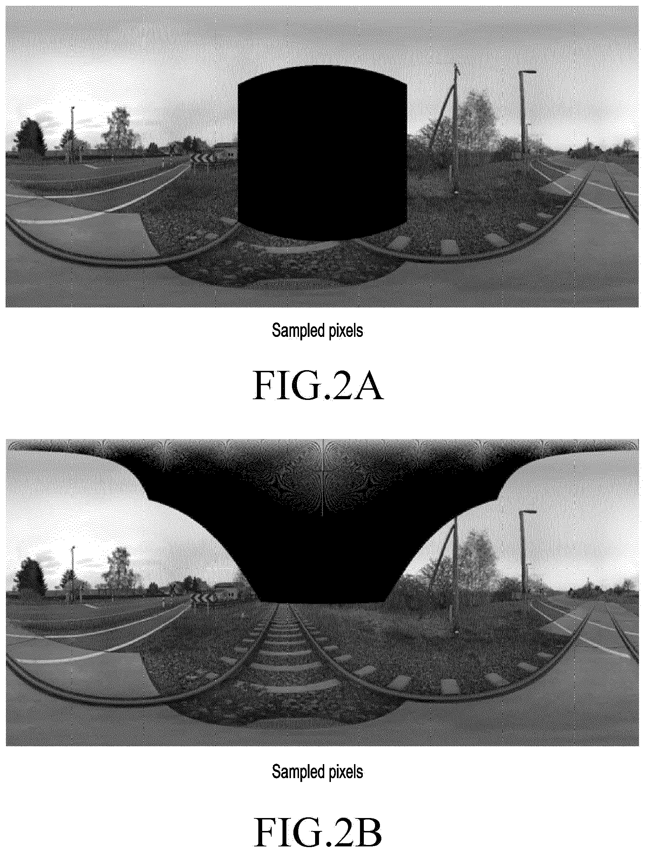

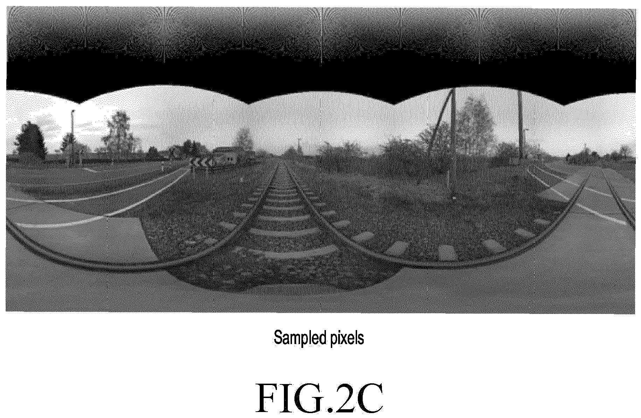

FIGS. 2a, 2b, and 2c are views illustrating example ERP images according to the disclosure.

Viewport means a projection from a user's perspective. When viewing VR content, 'part' of the basic VR content may be rendered by a VR display device. The part of the basic VR content is referred to as a viewport. For example, a head-mounted display device (HMD) may render a viewport based on the user's head movement.

Viewport may have various definitions. Viewport may refer to the display part of an HMD or a part of VR content subject to rendering, or information for screening the part subject to rendering.

For omnidirectional images, the image camera device the user's perspective of the entire content in the spherical coordinate system or equirectangular projection (ERP), i.e., part of the overall image, is typically referred to as a viewport.

Thus, information related to a viewport includes a viewpoint and a field of view (FoV). Viewpoint means the user's viewing orientation, and FoV, as relating to the coverage area, refers to the range of view to be output on the display of the HMD. A viewpoint may be represented with a yaw angle and a pitch angle in the spherical coordinate system, and an FoV may represent the width of the yaw angle and the width of the pitch angle as angles.

The omnidirectional video image according to the disclosure may be a 4k equirectangular projection (ERP) image. The resolution of the 4k ERP image may be 4096x2048. 4k may mean 4096 which is the resolution along the horizontal axis. The resolution of an viewport image according to the disclosure may be 640x720. The left-hand image and the right-hand image respectively camera device the left eye and right eye of the head-mounted display device may be 640x720 in resolution.

The specific numbers are an example and are not intended to limit the technical scope of the disclosure. For example, the resolution of the 4k ERO image may be 3840 x 2160 or 3840 x 1920, and the resolution of the viewport image may be 630 x 700.

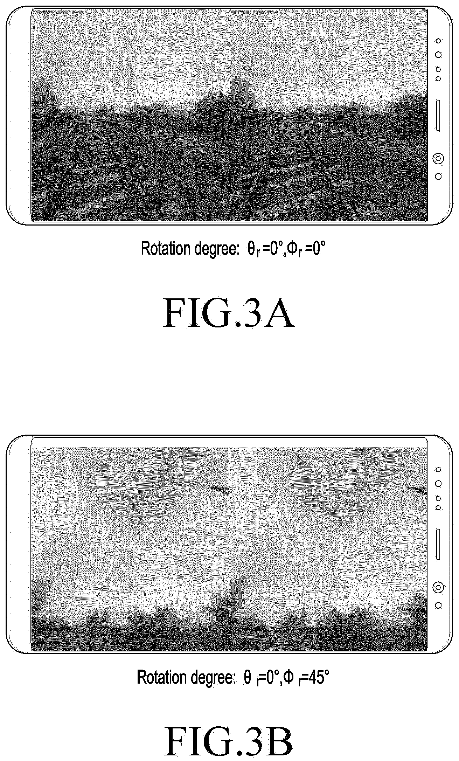

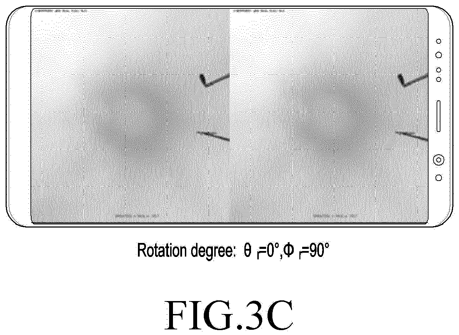

FIGS. 3a, 3b, and 3c are views illustrating example viewport images according to the disclosure.

As disclosed in FIGS. 3a, 3b, and 3c, $\theta_r$ means the center yaw angle of the viewpoint, and $\phi_r$ means the center pitch angle.

The viewpoint may be defined by the center yaw angle and the center pitch angle. For example, the viewpoint may be expressed as: viewpoint = (center_yaw, center_pitch).

For example, the display screen on both eyes of the head-mounted display are shown in FIG. 3a for the viewpoint of (0°, 0°), FIG. 3b for the viewpoint of (0°, 45°), and **FIG. 3a** for the viewpoint of (0°, 90°).

Various embodiments are possible for center_yaw and center_pitch representing the viewpoint as long as center_yaw and center_pitch are convertible into angles. center_yaw and center_pitch may be expressed in a floating point or fixed-point number representation. Or, they may be expressed as integers based on a base unit. For example, if the base unit is ($2^{-16}$ °), and center_yaw = 100 x $2^{16}$, then center_yaw ends up meaning 100°.

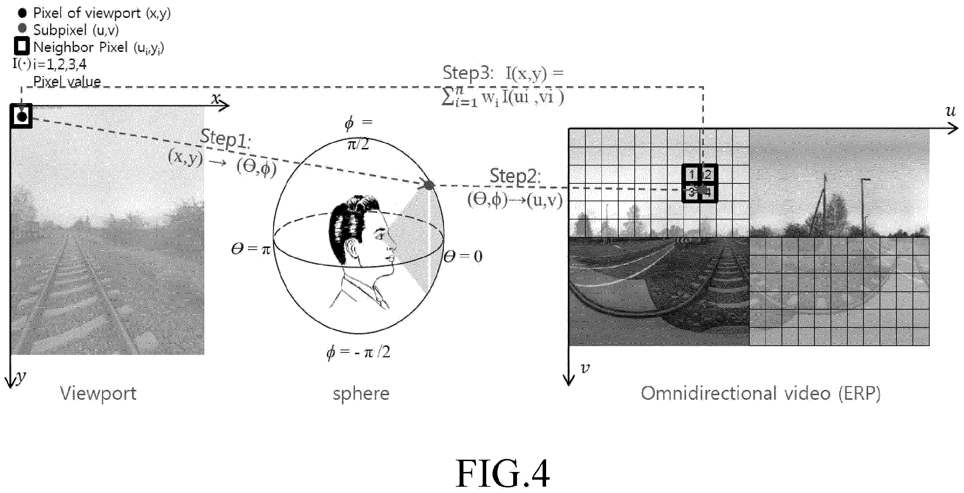

FIG. 4 is a view illustrating an example method of mapping a viewport image and an ERP image to render a viewport.

First, the coordinates (x, y) of a viewport are converted into spherical coordinates $(\theta, \varphi)$ using, e.g., a perspective or azimuthal projection method. Here, $\theta$ means the yaw angle, and $\varphi$ means the pitch angle. The converted spherical coordinates $(\theta, \varphi)$ are converted into a subpixel (u, v) of the ERP image. The ERP image of FIG. 4 is omnidirectional video coordinates. That is, the range of u is determined to meet -180° < u < 180°, and the range of v is determined to meet -90° < u < 90°.

The pixel values of neighboring pixels including the subpixel (u, v) may be obtained, and the pixel value corresponding to the coordinates (x, y) of the viewport may be calculated based on the obtained pixel values of the neighboring pixels. Further, a weight may be applied to the obtained pixel values of the neighboring pixels, and the pixel value corresponding to the coordinates (x, y) of the viewport may be obtained.

Further, in the method of processing a virtual reality image according to the disclosure, the subpixel (u, v) of the ERP image may immediately be obtained from the coordinates (x, y) of the viewport. At this time, a correspondence table representing the correspondence between the coordinates (x, y) of the viewport and the subpixel (u, v) of the ERP image may previously be obtained experimentally, and the correspondence table may be used to immediately obtain the subpixel (u, v) of the ERP image corresponding to the coordinates (x, y) of the viewport.

The pixel value of the coordinates (x, y) of the viewport may be calculated from the pixel values of the neighboring pixels including the subpixel (u, v) according to the following equation.

$$[\text{Equation } 1]$$

$$I(x, y) = \sum_{i=1}^{n} w_i \, I(u_i, v_i)$$

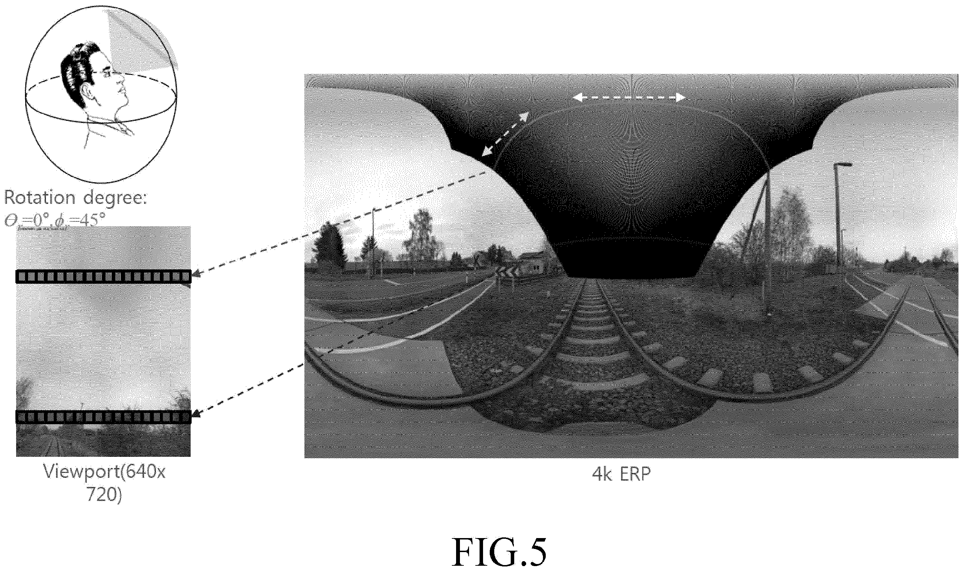

FIG. 5 is a view illustrating an example method of mapping a viewport image and an ERP image to render a viewport.

The figure on the left side of FIG. 5 refers to a viewport with a pitch angle of 45°, and the figure on the right side of FIG. 5 refers to a 4k ERP image. FIG. 5 represents the mapping relationship between the viewport and the 4k ERP image. Typically, the upper curve in the ERP image mapped with the upper line of the viewport is larger in curvature than the lower curve in the ERP image mapped with the lower line of the viewport. The lower curve and upper curve of the ERP image corresponding to the lower line and upper line of the viewport may be obtained experimentally.

Since the sampling rate differs per row of the viewport, using a predetermined interpolation mask of, e.g., 4x4 or 2x2 in the ERP image to obtain the pixel value of the coordinates of the viewport may cause a significant error. A need exists for a method of applying a different sampling rate to each row of the viewport.

A method of rendering a viewport according to the disclosure may perform rendering per horizontal line of the viewport. Each curve corresponding to the 4k ERP image may previously be obtained for each horizontal line, and the pixel value corresponding to the coordinates (x, y) of the viewport may be obtained by an interpolation method along each curve corresponding to each horizontal line of the viewport.

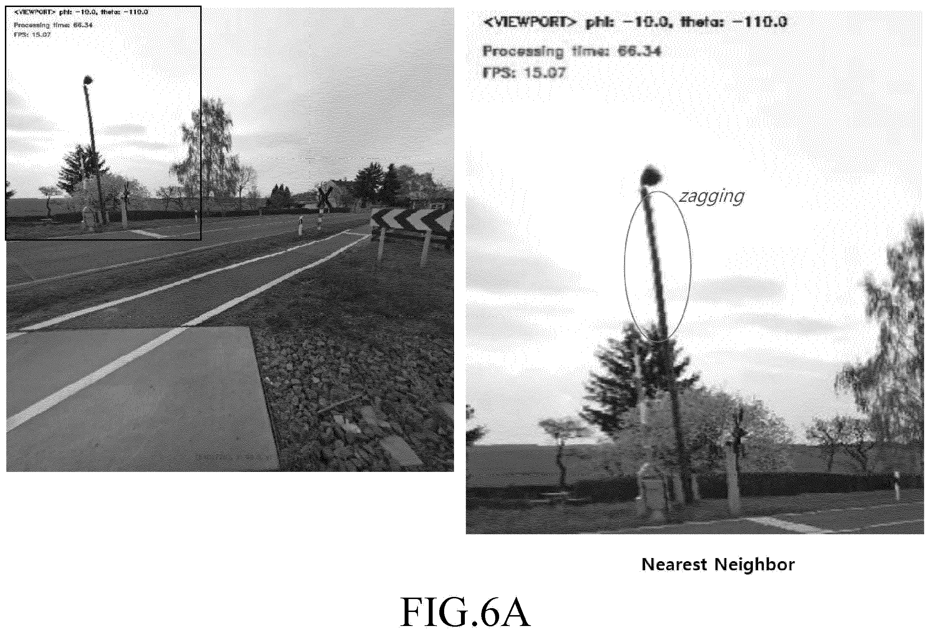

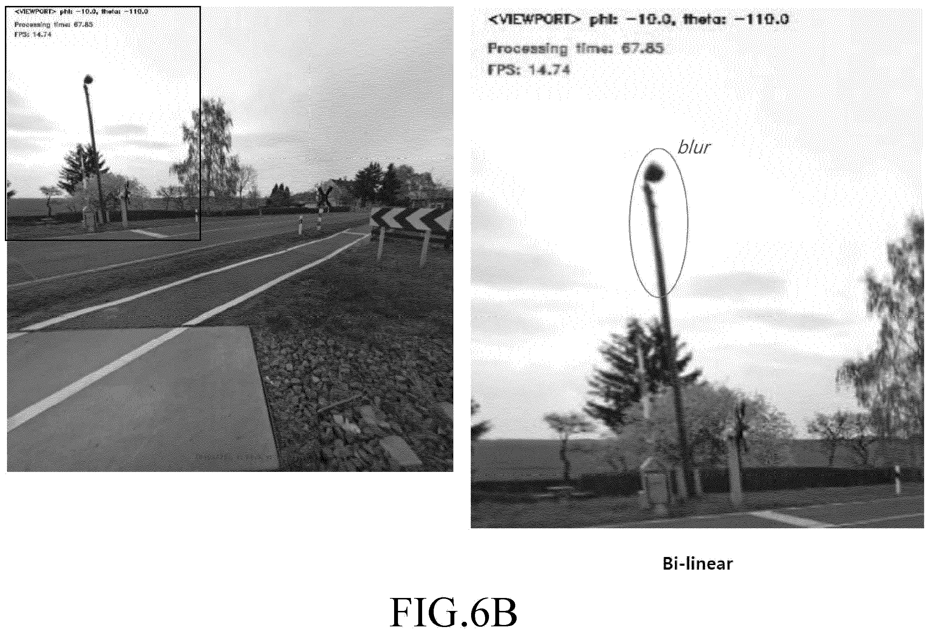

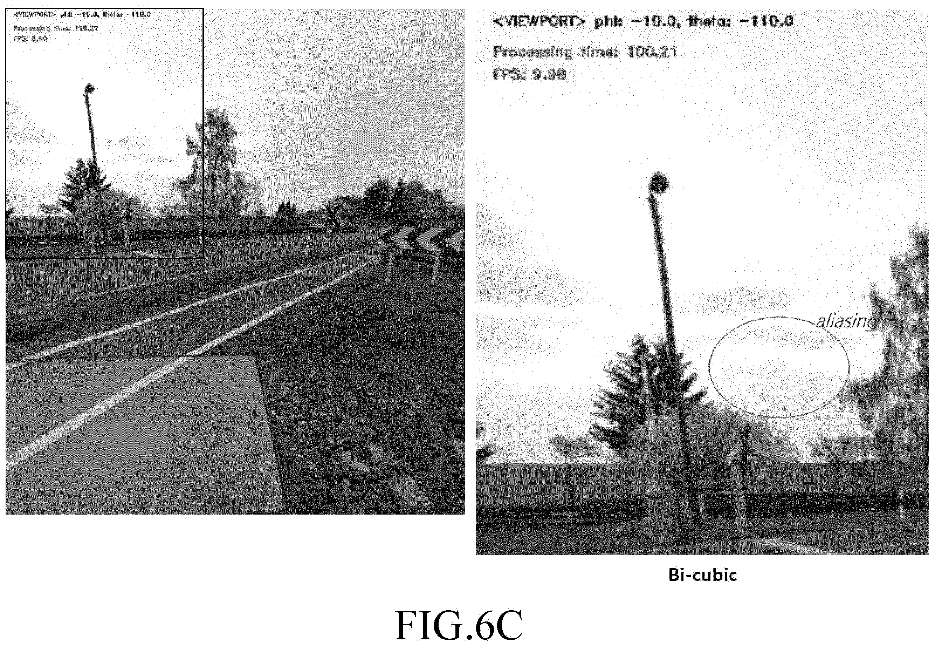

FIGS. 6a, 6b, and 6c are views illustrating examples of zagging, blur, and aliasing shown in a viewport image generated.

FIG. 6a represents the results of using a nearest neighborhood method to obtain the pixel value corresponding to the coordinates (x, y) of a viewport. The nearest neighborhood method is a method to obtain the pixel value corresponding to the coordinates (x, y) of the viewport using the pixel value nearest to the subpixel (u, v) of the ERP image. Because of using the nearest pixel value, reducing conversion may lose pixels, probably causing zagging (a zig-zag pattern).

FIG. 6b represents the results of using a bi-linear interpolation method to obtain the pixel value corresponding to the coordinates (x, y) of a viewport. The bi-linear interpolation method is a method of consecutively performing twice a normal linear interpolation method along the horizontal direction or vertical direction. By the nature of interpolation along the horizontal or vertical direction, the bi-linear interpolation method enables a quick processing, but since it applies interpolation line by line, the image in the lines may be processed smoothly whereas the image between the lines may be blurred due to a deviation.

FIG. 6c represents the results of using a bi-cubic interpolation method to obtain the pixel value corresponding to the coordinates (x, y) of a viewport. The bi-cubic interpolation method is a method of performing a cubic interpolation method twice consecutively. Because of using the weighted mean as the pixel value of the viewport using the pixel values positioned on the top, bottom, left, and right of the subpixel of the ERP, aliasing (uneven texture) may occur.

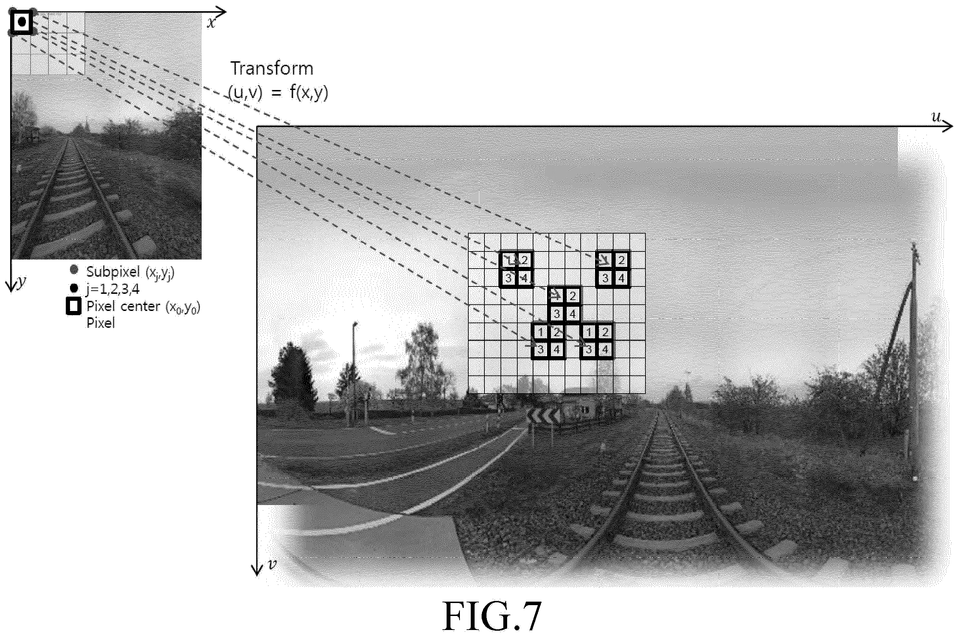

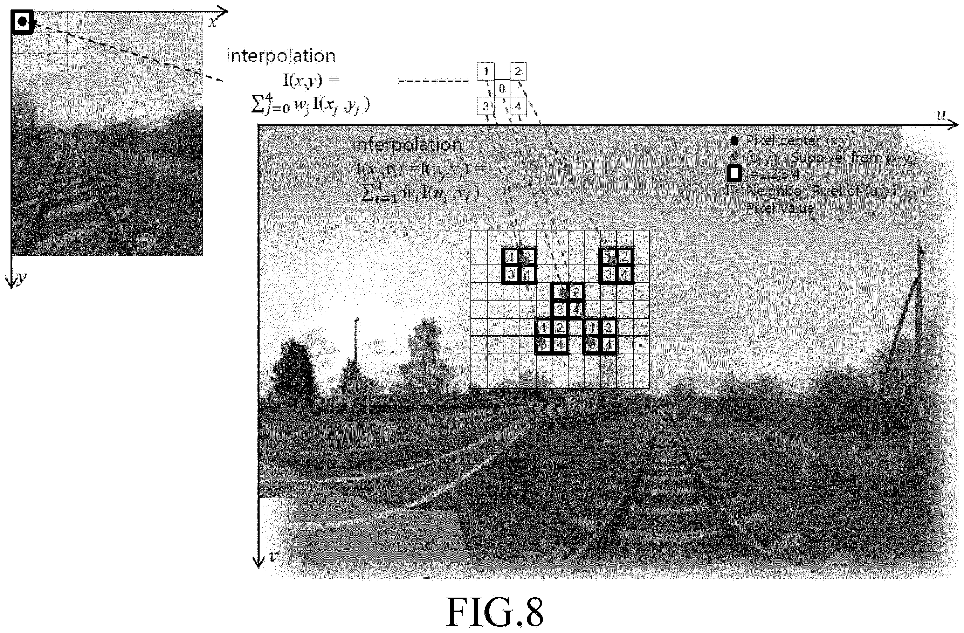

FIGS. 7 and 8 are views illustrating an example method of mapping a viewport image and an ERP image according to the disclosure.

FIG. 7 is a view illustrating an example method of determining a plurality of neighboring pixels in an ERP image for one pixel of a viewport. Four vertexes and the center point of one pixel of a viewport are obtained, and the subpixels of the viewport corresponding to the coordinates of the obtained center point and four vertexes are obtained. The subpixels of the ERP image corresponding to the subpixels of the viewport are obtained, and the respective neighboring pixels of the subpixels of the ERP image are determined.

Referring to FIG. 8, the pixel values of the determined neighboring pixels are weight-averaged, and the pixel values of the center point and the four vertexes are obtained. The method of obtaining the pixel value of each point is similar to that described above in connection with FIG. 4.

First, where the center point of one pixel of the viewport is $(x_0, y_0)$, and the vertexes of the pixel are $(x_1, y_1)$, $(x_2, y_2)$, $(x_3, y_3)$, and $(x_4 \ y_4)$, the center point and the vertexes each represent a subpixel of the viewport. The subpixel of the viewport may be expressed as $(x_j, y_j)$ and be calculated by the following equation.

[Equation 2]

$$I(x_j, y_j) = \sum_{i=1}^{4} w_i \, I(u_i, v_i)$$

The pixel value of the pixel (x, y) of the viewport may be calculated using the results of the above equation and the following equation.

[Equation 3]

$$I(x, y) = \sum_{j=0}^{4} w_j \, I(x_j, y_j)$$

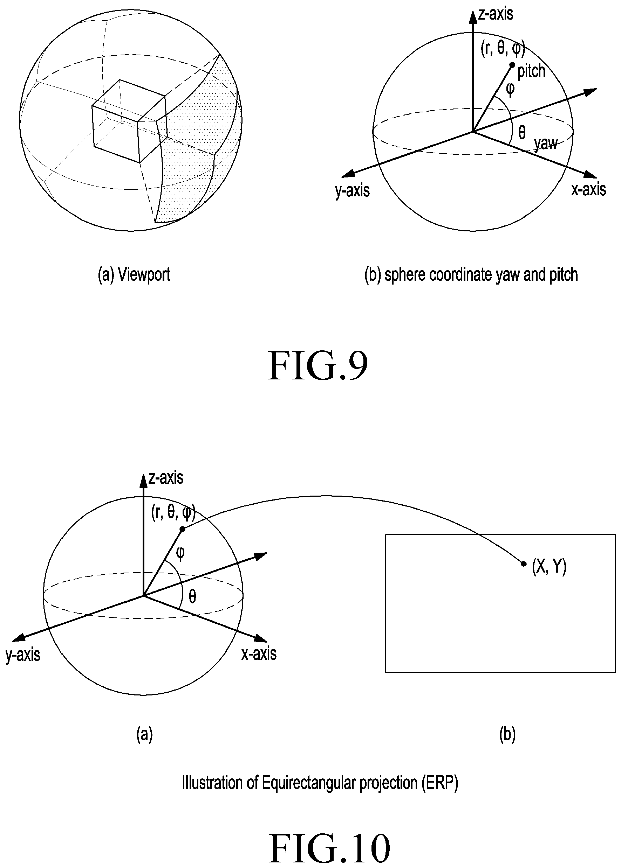

FIG. 9(a) is a view illustrating a viewport image, and FIG. 9(b) is a view illustrating a yaw angle and a pitch angle in a spherical coordinate system.

A viewport may be represented in two schemes: 1) a scheme in which the viewport includes a viewpoint and a field of view (FoV); and 2) a scheme of representing the viewport itself.

The viewpoint and the FoV may be represented as in the following equation.

$$[\text{Equation } 4]$$

$$\text{viewpoint} = (\text{center\_yaw}, \text{center\_pitch})$$

$$\text{FoV} = (\text{FOV\_yaw}, \text{FOV\_pitch})$$

The viewport may be represented as in the following equation instead of using the viewpoint and the FoV.

$$[\text{Equation } 5]$$

$$\text{viewport} = (\text{yaw\_left}, \text{yaw\_right}; \text{pitch\_top}, \text{pitch\_bottom})$$

The following relationship between Equation 4 and Equation 5 occurs.

$$[\text{Equation } 6]$$

$$\text{yaw\_left} = \text{center\_yaw} + \text{FOV\_yaw} / 2,$$

$$\text{yaw\_right} = \text{center\_yaw} - \text{FOV\_yaw} / 2,$$

$$\text{pitch\_top} = \text{center\_pitch} + \text{FOV\_pitch} / 2,$$

$$\text{pitch\_bottom} = \text{center\_pitch} - \text{FOV\_pitch} / 2$$

For example, when viewpoint = (90°, 0°), 및 FOV = (120°, 100°), viewport = (150°, 30°, 50°, -50°).

Architecture A: Track covering entire content geometry

FIG. 10 is a view illustrating an example method of mapping coordinates in a spherical coordinate system to coordinates in an ERP image.

Spherical coordinates $(r, \theta, \varphi)$ are converted in coordinates $(x, y)$ on an ERP. At this time, x may correspond to the yaw angle $(\theta)$, and y may correspond to the pitch angle $(\varphi)$.

According to an embodiment of the disclosure, a track may be designed to include the geometry of the entire content.

Architecture A has the following features. Samples of a video stream or video track may include the geometry of the entire content. For example, where the range of the yaw angle $(\theta)$ is $-180° < \theta < 180°$, and the range of the pitch angle $(\varphi)$ is $-90° < \varphi < 90°$ in the ERP of FIG. 10, the ERP projection image becomes an omnidirectional image. This may be referred to as 360-degree image, entire content, more simply as a 360-degree image, 360-video. Typically, architecture A may be carried out by capturing a spherical 360-video and mapping the captured 360-video to a two-dimensional planar surface. A player (e.g., an HMD) may select a viewport, extract from the 360-video, and render the selected viewport.

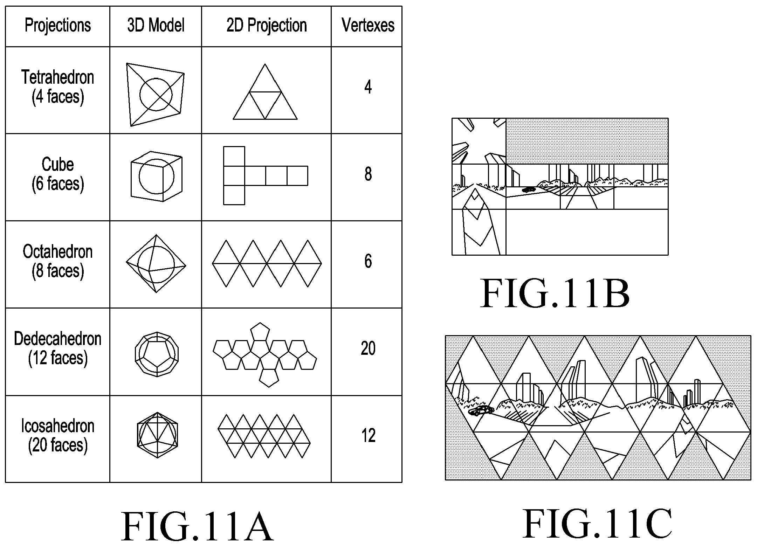

FIG. 11 is a view illustrating an example method of projecting a 360-degree image onto a two-dimensional planar surface according to another embodiment of the disclosure.

An omnidirectional image may be generated by another projection method. For example, 360-degree images may be generated using a regular polyhedron, and the generated 360-degree images may be projected onto a two-dimensional planar surface.

FIG. 11(a) shows a three-dimensional model, a two-dimensional projection, and the number of faces as per a polyhedron. FIG. 11(b) shows a two-dimensional projection of a cube, and FIG. 11(c) shows a two-dimensional projection of an icosahedron.

FIG. 11(a) discloses other methods of projecting a spherical 360-degree image onto a two-dimensional planar surface. Generally, the default is to project onto a regular polyhedron. The regular polyhedron, because of being able to surround with a plurality of two-dimensional planar surfaces, may be represented as a two-dimensional planar surface similarly to an ERP. While an ERP image is generated in a rectangular shape by projecting an image projected onto a sphere onto a rectangle, the method of projection using a regular polyhedron may require a padding region, e.g., a black region, as shown in FIGS. 11(b) and 11(c).

Since various polyhedrons may be put to use, it is critical to indicate information regarding the default projection method to the file format (e.g., international organization for standardization base media file format (ISOBMFF)) in order for a client, e.g., HMD, to precisely render the viewport from the 360-degree image. That is, the ISOBMFF-format data may contain metadata that may contain information regarding the default projection method.

Architecture B: viewport-based architecture

Architecture B is designed based on viewport. A track may have been stitched or not. This is called a viewport-based architecture.

As per Architecture B, video content may be split into multiple ones. Each covers different portions of a spherical 360-degree image. Each split portion is called a track viewport. An, or no, overlap may exist between the track viewports. Typically, a content server or a camera-equipped image processing device creates the track viewports.

A client (e.g., an HMD) selects a viewport subject to rendering. A request for at least one track viewport corresponding to the selected viewport is sent to the content server or image processing device, and the track viewport is received from the content server or image processing device. However, the HMD may include a camera device, and it is not excluded from the scope of the disclosure to obtain track viewports from an image captured on its own.

To render the selected viewport, a plurality of track viewports may be necessary. Dependency may exist among the plurality of track viewports. In other words, since a track viewport merely represents a small portion of a video portion, it alone may not be played. That is, absent other tracks, a dependent track alone may not be presented.

Where the plurality of track viewports have dependency, the client may send a request for a viewport related to the track viewport overlapping the selected viewport and render the selected viewport.

Each track may be individually stored as a separated file, or a plurality of tracks may be stored in one file, or one track may be separated and stored in a plurality of files.

Where the tracks have dependency, a "Track Reference Box" may be used to specify reference tracks related to the track viewport overlapping the selected viewport.

Embodiment B.1: stitching, projection, partitioning

According to the disclosure, a 360-spherical content is generated by a camera device capturing 360-degree images and is projected onto a two-dimensional planar surface. Then, the projected planar surface is separated into regions, and each separated region is encapsulated into a track.

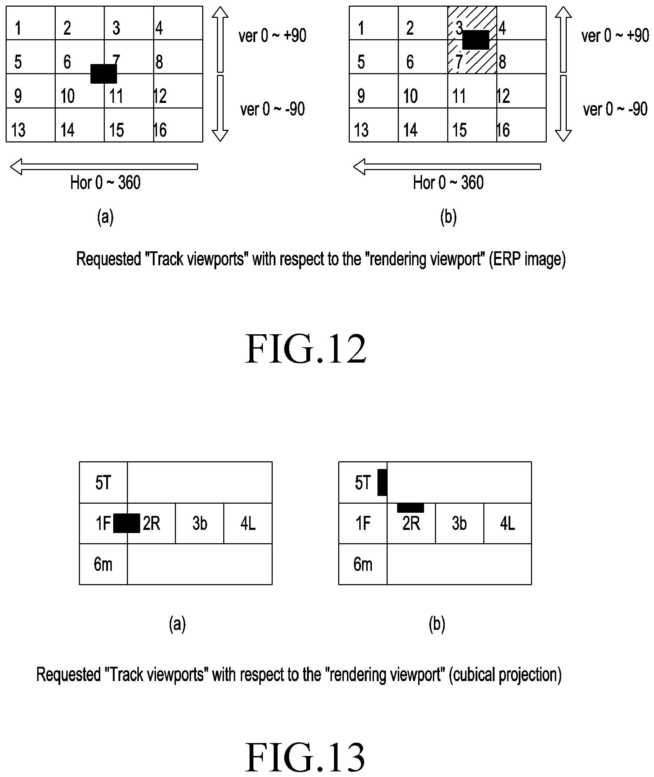

FIG. 12 is a view illustrating a "track viewport" required in relation to a "viewport subject to rendering" in an ERP image according to an aspect of the disclosure.

Referring to FIG. 12, VR content is projected with ERP and is split for each track to occupy a portion (track viewport) of the 360-spherical image. The regions numbered 1, 2, 3, ...., 16 each are a track viewport. By the numbering, they may be termed number 1 track viewport, number 2 track viewport,..., number 16 track viewport. When a client, e.g., an HMD, selects a "viewport subject to rendering," tracks related to one or more files may be required based on the "track viewport."

For example, if the black region in the center of FIG. 12(a) is the "viewport subject to rendering," the "track viewports" requested are number 6 track viewport, number 7 track viewport, number 10 track viewport, and number 11 track viewport. If the black region of FIG. 12(b) is the "viewport subject to rendering," the "track viewport" are number 3 track viewport and number 7 track viewport.

FIG. 13 is a view illustrating a "track viewport" required in relation to a "viewport subject to rendering" using cubical projection according to another embodiment of the disclosure.

VR content is generated and is projected onto a two-dimensional planar surface using cubic projection. The projected planar surface is split into regions precisely corresponding to the faces of the cube, and each region is encapsulated into a track.

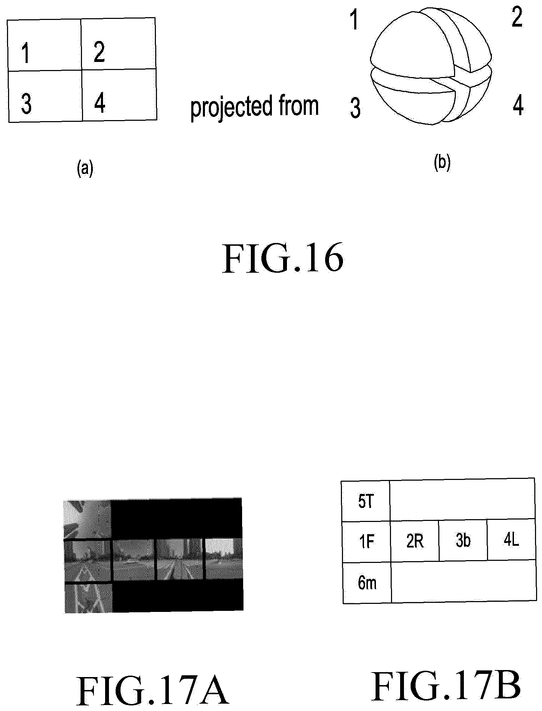

In FIGS. 13(a) and 13(b), the faces of the cube are denoted with IF, 2R, 3b, 4L, 5T, and 6m. This is similar to FIG. 17(b). However, FIG. 13 differs from FIG. 17(b) in that it uses 21 instead of 2R and 4r instead of 4L. Each projection surface may be named variously according to embodiments.

If the black portion shown in FIG. 13(a) is the "viewport subject to rendering," the "track viewports" requested are IF and 2R. If the black portion shown in FIG. 13(b) is the "viewport subject to rendering," the "track viewports" requested are 2R and 5T.

If the tracks requested have dependency with other tracks, the reference track(s) may be implied and requested by the "track reference box."

Embodiment B.2: No stitching (output of individual camera, arbitrary arrangement)

According to the instant embodiment, in a capturing device (content generating device), a frame captured by each camera is not stitched. Image stitching means the process of merging multiple photo images with the field-of-view's (FoVs) overlapping to generate a high-resolution image or fragmented panorama

Individual video sequences from each camera are encapsulated into tracks. In other words, the "track viewport" is the same as the viewport of each camera. Generally, viewports of cameras overlap. That is, individual video sequences from cameras may be individually received without stitching.

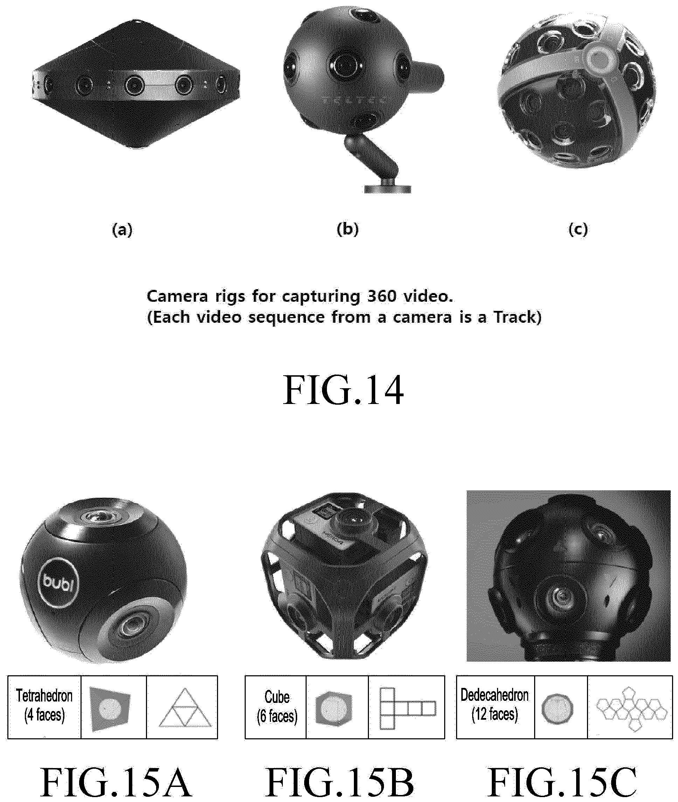

FIG. 14 illustrates camera devices for capturing a 360-degree image.

To produce a selected "rendering viewport," the client performs stitching and projection on frames from different cameras. The file format (e.g., ISOBMFF) is allowed to use the syntax indicating an arbitrary placement of the camera viewport by specifying the pitch and yaw border of each camera or specifying the FoV and orientation of the camera. That is, the ISOBMFF-formatted data may contain metadata that may contain information regarding the arbitrary placement of the camera viewport.

Embodiment B.3: No stitching (output of individual camera, regular arrangement)

According to the instant embodiment, in a capturing device (content generating device), a frame captured by each camera is not stitched. Individual video sequences from each camera are encapsulated into tracks.

Unlike in embodiment B.2, the camera device of embodiment B.3 is set to comply with the regular arrangement, like one of the projections onto the faces of a regular polyhedron with one camera oriented to one face of the regular polyhedron.

FIG. 15 is a view illustrating an example of a capturing range depending on the shape of camera devices capturing a 360-degree image. FIG. 15(a) illustrates an example tetrahedral camera device, FIG. 15(b) illustrates an example cube-shaped camera device, and FIG. 15(c) illustrates an example dodecahedral camera device. That is, the figure depicts that the camera device corresponds to projection of a regular tetrahedron (four cameras), a regular cube (six cameras), and a regular dodecahedron (12 cameras).

By specifying the regular polyhedron used for the camera device in file format (e.g., ISOBMFF), the client may be aware of the precise camera deployment. That is, the client may be aware of the orientations of the cameras and the stitching method of producing VR content. The ISOBMFF-formatted data may contain metadata that may contain information regarding the deployment and orientations of the cameras and the stitching method of producing VR content.

Also necessary is specifying the FoV of the cameras by the file format used by the client for rendering.

Using the properties of architecture B, it is critical for the file format to indicate the default projection method and the "track viewport" so that the client (e.g., an HMD) precisely request relevant tracks/files.

Generally, the aspect ratio and resolution of each track in architecture B need not remain equal. For example, in the case of ERP for two-dimensional projection before partitioning into different track viewports, the top and bottom portions may be split into larger rectangles than the center region. Or, the top and bottom portions may be split to have a lower resolution than the center region.

Suggested below is the syntax structure applicable to all of the above-described embodiments.

Track-based syntax is for specifying the VR property of containing tracks.

**Encoded frames** may be VR content. The encoded frames may include an entire VR scene (e.g., spherical 360-degree image or projections). Or, the encoded frames may only include part of the entire VR scene.

SchemeType 'vrvi' (VR video box) may be used. Or, other unique names may be used.

The following table represents the definition of 'vrvi.'

[Table 1]

| BoxType | 'vrvi' |
| --- | --- |
| Container | Scheme Information box('schi') |
| Mandatory | Yes(when the Schemetype is 'vrvi') |

(continued)

| BoxType | 'vrvi' |
|---------|--------|
| Quantity | One |

A VR video box may be used for an encoded frame to include the entire 360-degree image scene or only part of the spherical scene. When the schema type is 'vrvi,' the VR video box may exist.

The following table represents the syntax of 'vrvi.'

[Table 2]

```
aligned(8) class VrVideoBox extends extends FullBox('vrvi', version = 0, 0)
{
    unsigned int(16)reserved = 0;
    unsigned int(8)  pre_stitched;      // 0: No stitching, 1: Stitched and projected

    unsigned int(8)  entire_active_range;;
    if (entire_active_range == 0x04)
    {
    unsigned int(16) hor_active_range;
    unsigned int(16) vert_active_range;
    }

    if (pre_stitched) {              // Pre-stitched and projected
        unsigned int(32)geometry_type;

        unsigned int(32)platonic_projection_type;

        unsigned int(1) vr_scene_fraction;   // 0:Entire 360, 1: Fraction

        if (geometry_type ==(Sphere)){
                        // Projected using ERP, and only fraction
            short  yaw_left;      // Specify "Track viewport"
            short  yaw_right;
            short  pitch_top;
            short  pitch_bot;
        }
        if (geometry_type != (Sphere)){  // Projected using polygonal geometries
            ussigned int(8)  num_faces;      // From CICP
            if (vr_scene_fraction)
                ussigned int(8)  face_id;       // Track viewport = face
        }
    }
    else{                       // No stitching, individual from camera
        unsiged int(1)      platonic_arranged;
        if (platonic_arranged)             // Camera arranged as platonic solid
        {
            ussigned int(8)  num_faces;      // Camera orientation = face
            ussigned int(8)  face_id;           // Track viewpoint
            short           fov_yaw; // Only need FOV of the camera
            short              fov_pitch;// Note [1] below
        }
        else {                  // Arbitrary camera arrangement
            short  yaw_left;              // Specify "viewport" of the camera
            short  yaw_right;             // Note [2] below
            short  pitch_top;
            short  pitch_bot;
        }
    }

    Box[] any_box;          // optional

}
```

In another method according to the disclosure, the FoV may be obtained by camera parameters. For example, the FoV may be obtained through normal optical devices using the sensor dimension and focal length.

As described above, another method of specifying a viewport is to use the viewpoint (or orientation) and the FoV. The orientation (center_yaw, center_pitch) of the camera may be specified, and the FoV may be signaled by fov_yaw and fov_pitch of the syntax or be obtained by the camera parameters (e.g., sensor dimension and focal length).

pre_stitched is an integer. If pre_stitched is 1, content is pre-stitched and projected onto a two-dimensional planar surface before encapsulated into one or more tracks.

If pre_stitched is 0, content is not stitched and the video sequence from each camera is individually encapsulated.

entire_active_range indicates the overall coverage range (geometrical surface) of content to be rendered along with the video delivered by all relevant tracks. Refer to the following table for definitions as per values of entire_active_range.

[Table 3]

| Value | entire_active_range |
|---|---|
| 0x00 | Reserved |
| 0x01 | 360(H)xl80(V) |
| 0x02 | 180(H)x180(V) |
| 0x03 | 360(H)x100(V) |
| 0x04 | Restricted view |
| 0x05-0xFF | Other reserved ranges |

hor_active_range denotes the horizontality range (degree) of content where the content is restricted in view (i.e., degree_range = 3).

vert_active_range denotes the vertical angle range (degree) of content where the content is restricted in view (i.e., degree_range = 3).

geometry_type denotes the geometrical shape specified to render omnidirectional media.

[Table 4]

| Value | geometry_type |
|---|---|
| 0x00 | Reserved |
| 0x01 | Sphere |
| 0x02 | Cylinder |
| 0x03 | Platonic Solid |
| 0x04 | Quartz-based Projection (QZP) |
| 0x05-0xFF | Reserved |

platonic_projection_type denotes the shape of regular polyhedron to render omnidirectional media.

[Table 5]

| Value | platonic_projection_type |
|---|---|
| 0x00 | Reserved |
| 0x01 | Tetrahedron (4 surfaces) |
| 0x02 | Cube (6 surfaces) |
| 0x03 | Octahedron (8 surfaces) |
| 0x04 | Icosahedrons (20 surfaces) |
| 0x05-0xFF | Reserved |

scene_fraction is an integer. If scene_fraction is 0, this indicates that content includes the entire VR scene. That is, each frame includes the entire scene. The scene range of the frame, i.e., each frame includes the entire scene. The scene range of the frame is derived to meet: (yaw_left, yaw_right) = (0,360) and (pitch top, pitch bot) = (-90,90). If scene_fraction is 1, the frame is in charge of part of the scene. Coverage is represented in the following syntax.

Where platonic_arranged content is not stitched (pre_stitched = 0), the syntax indicates whether a camera rig is particularly placed. When the value is 1, this indicates that the camera is oriented to each point facing a given face of the regular polyhedron.

num_faces is signaled in the two situations as follows.

A. vr_projection_type indicates that a projection is on the regular polyhedron. Its value may be 4, 8, 12, or 20 to represent the projection method. (6 is for regular cubic projection).

B. platonic_arranged denotes that non-stitched camera content is obtained by the cameras arranged along the regular polyhedron.

face_id is signaled in the two situations as follows.

A. When vr_scene_fraction = 1, and vr_projection_type indicates that the projection is on the regular polyhedron, it denotes the face from an included track as per pre-determined indexing of the regular polyhedron.

B. platonic_arranged denotes that non-stitched camera content is obtained by the cameras arranged along the regular polyhedron. This value denotes that the direction of the camera corresponds to the pre-determined indexing of the regular polyhedron.

yaw_left, yaw_right, pitch_top, and pitch_bot denote the viewport of the included track.

fov_yaw and fov_pitch denote the FoV of the camera in the horizontal and vertical directions. Where the camera is aligned with the face of the regular polyhedron, the orientation is determined and, to determine the viewport of the camera, only two parameters for FoV are necessary.

Embodiment 1

In ERP, the syntax in the embodiment of covering the entire scene with one track is as follows.

[Table 6]

```
aligned(8) class VrVideoBox extends extends FullBox('vrvi', version = 0, 0)
{
  unsigned int(30) reserved = 0;
  unsigned int(1) pre_stitched = 1; // 0: No stitching, 1: Stitched and projected
  if (pre_stitched) { // Pre-stitched and projected
     unsigned int(32) geometry_type = Sphere; // Refer CICP
     unsigned int(1) vr_scene_fraction = 0;// 0:Entire 360, 1: Fraction
  }
} Box[] any_box; // optional
```

Embodiment 2

FIG. 16 is a view illustrating an example method of projecting from a spherical image.

FIG. 16 illustrates an embodiment of covering part of each scene with four tracks in ERP.

In FIG. 16, the syntax of region 1 is as follows.

[Table 7]

```
aligned(8) class VrVideoBox extends extends FullBox('vrvi', version = 0, 0)
{
  unsigned int(30) reserved = 0;
  unsigned int(1) pre_stitched = 1; // 0: No stitching, 1: Stitched and
projected
  if (pre_stitched) { // Pre-stitched and projected
    unsigned int(32) geometry_type = Sphere; // Refer CICP
    unsigned int(1) vr_scene_fraction = 1; // 0:Entire 360, 1: Fraction
    if (vr_projection_type==1){
                     // Projected using ERP
       short yaw_left = 180; // Specify "Track viewport"
       short yaw_right = 0;
       short pitch_top = 90;
```

```
      short pitch_bot = 0;
    }
  }
  Box[] any_box; // optional
}
```

Embodiment 3

In cubic projection, the syntax for an embodiment of covering the entire scene with one track is as follows.

[Table 8]

```
aligned(8) class VrVideoBox extends extends FullBox('vrvi', version = 0, 0)
{
  unsigned int(30) reserved = 0;
  unsigned int(1) pre_stitched = 1; // 0: No stitching, 1: Stitched and projected
  if (pre_stitched) { // Pre-stitched and projected
    unsigned int(32) geometry_type = Sphere; // Refer CICP
    unsigned int(1) vr_scene_fraction = 0;// 0:Entire 360, 1: Fraction
    if (vr_projection_type==Platonic Solid) // Projected using platonic solid
      ussigned int(8) num_faces = 6; // Cube
  }
  Box[] any_box; // optional
}
```

Embodiment 4

FIG. 17 is a view illustrating an example method of cubic projection.
In cubic projection, the syntax for an embodiment of covering the "front face" (i.e., 1f) among six tracks is as follows.

[Table 9]

```
aligned(8) class VrVideoBox extends extends FullBox('vrvi', version = 0, 0)
{
  unsigned int(30) reserved = 0;
  unsigned int(1) pre_stitched = 1; // 0: No stitching, 1: Stitched and projected
  if (pre_stitched) { // Pre-stitched and projected
    unsigned int(32) geometry_type = Platonic Solid;
    unsigned int (32) platonic_projection_type = Cube;
    unsigned int(1) vr_scene_fraction = 1;// 0:Entire 360, 1: Fraction
    if (geometry_type ==3){ // Projected using platonic solid
      ussigned int(8) num_faces = 6; // Cube
      if (vr_scene_fraction==1)
        ussigned int(8) face_id = 1; // "front" face
    }
  }
  Box[] any_box; // optional
}
```

Embodiment 5

The following table represents the syntax for an embodiment in which one track covers the entire scene in a regular octahedron.

[Table 10]

```
aligned(8) class VrVideoBox extends extends FullBox('vrvi', version = 0, 0)
{
  unsigned int(30) reserved = 0;
  unsigned int(1) pre_stitched = 1; // 0: No stitching, 1: Stitched and projected
  if (pre_stitched) { // Pre-stitched and projected
      unsigned int(32) geometry_type = Platonic Solid;
      unsigned int (32) platonic_projection_type = Octahedron;
      unsigned int(1) vr_scene_fraction = 1;// 0:Entire 360, 1: Fraction
      if (geometry_type = 3) // Projected using platonic solid
        ussigned int(8) num_faces = 8; // Octahedron
  }
  Box[] any_box; // optional
}
```

Embodiment 6

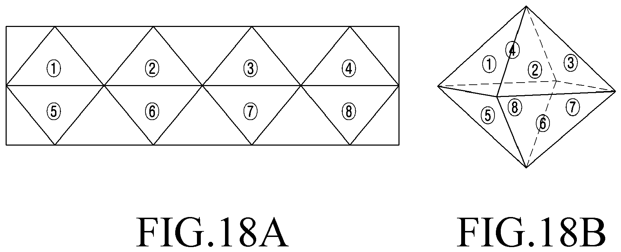

FIG. 18 is a view illustrating an example method of regular octahedral projection.

The following table represents the syntax for an embodiment of covering the scene of the number 3 face of the regular octahedron of FIG. 18.

[Table 11]

```
aligned(8) class VrVideoBox extends extends FullBox('vrvi', version = 0, 0)
{
  unsigned int(30) reserved = 0;
  unsigned int(1) pre_stitched = 1; // 0: No stitching, 1: Stitched and projected
  if (pre_stitched) { // Pre-stitched and projected
    unsigned int(32) geometry_type = Platonic Solid;
    unsigned int (32) platonic_projection_type = Octahedron;
    unsigned int(1) vr_scene_fraction = 1;// 0:Entire 360, 1: Fraction
    if (geometry_type ==3){ // Projected using platonic solid
      ussigned int(8) num_faces = 8; // Octahedron
      if (vr_scene_fraction==1)
        ussigned int(8) face_id = 3; // face 3
    }
  }
  Box[] any_box; // optional
}
```

Embodiment 7

The following table represents the syntax for an embodiment of covering the face corresponding to one camera where the cameras are arbitrarily arranged as in the camera device proposed in FIG. 14.

[Table 12]

```
aligned(8) class VrVideoBox extends extends FullBox('vrvi', version = 0, 0)
{
  unsigned int(30) reserved = 0;
  unsigned int(1) pre_stitched = 0; // 0: No stitching, 1: Stitched and projected
  if (pre_stitched) {}
  else{ // No stitching, individual from camera
    unsiged int(1) platonic_arranged = 0;
```

```
if (platonic_arranged) // camera arranged as platonic solid
{}
else { // Arbitrary camera arrangement
  short yaw_left = LL; // Specify "viewport" of the camera
  short yaw_right = RR; // Or orientation + FOV
  short pitch_top = TT;
  short pitch_bot = BB;
}
}
Box[] any_box; // optional
}
```

Embodiment 8

The following table represents the syntax for an embodiment of covering the front face of a fish-eye camera.

[Table 13]

```
aligned(8) class VrVideoBox extends extends FullBox('vrvi', version = 0, 0)
{
  unsigned int(30) reserved = 0;
  unsigned int(1) pre_stitched = 0; // 0: No stitching, 1: Stitched and projected
  if (pre_stitched) {} // Pre-stitched and projected
  else{ // No stitching, individual from camera
    unsiged int(1) platonic_arranged = 0;
    if (platonic_arranged) // camera arranged as platonic solid
    {}
    else { // Arbitrary camera arrangement
      short yaw_left = 180; // Specify "viewport" of fisheye
      short yaw_right = 0;
      short pitch_top = 90;
      short pitch_bot = -90;
    }
  }
  Box[] any_box; // optional
}
```

Embodiment 9

The following table represents the syntax for an embodiment of covering the front face in the cubic projection of FIG. 15(b).

[Table 14]

```
aligned(8) class VrVideoBox extends extends FullBox('vrvi', version = 0, 0)
{
  unsigned int(30) reserved = 0;
  unsigned int(1) pre_stitched = 0; // 0: No stitching, 1: Stitched and projected
  if (pre_stitched) {} // Pre-stitched and projected onto 2D plane
  else{ // No stitching, individual from camera
    unsiged int(1) platonic_arranged = 1;
    if (platonic_arranged) // camera arranged as platonic solid
    {
      ussigned int(8) num_faces = 6; // Cube, camera orientation = face
      ussigned int(8) face_id = 1;
      short fov_yaw = 120; // Only need FOV of the camera
      short fov_pitch = 100;
```

```
            }
          }
           Box[] any_box; // optional
        }
```

Embodiment 10

The following table represents the syntax for an embodiment of covering a specific face in the tetrahedral projection of FIG. 15(a).

[Table 15]

```
aligned(8) class VrVideoBox extends extends FullBox('vrvi', version = 0, 0)
{
  unsigned int(30) reserved = 0;
  unsigned int(1) pre_stitched = 0; // 0: No stitching, 1: Stitched and projected
  if (pre_stitched) {} // Pre-stitched and projected onto 2D plane
  else{ // No stitching, individual from camera
    unsiged int(1) platonic_arranged = 1;
    if (platonic_arranged) // camera arranged as platonic solid
    {
       ussigned int(8) num_faces = 4; // Camera orientation = face
       ussigned int(8) face_id = 1;
      short fov_yaw = 150; // Only need FOV of the camera
      short fov_pitch = 120;
    }
  }
  Box[] any_box; // optional
}
```

While the configuration of the present invention has been described above in connection with the accompanying drawings, this is merely an example and various changes or modifications may be made thereto by one of ordinary skill in the art without departing from the technical spirit of the present invention. Thus, the scope of the present invention should not be limited to the above-described embodiments but rather be determined by the appended claims.

**Claims**

1. A method of processing a virtual reality image, the method comprising:

   selecting a viewport;
   transmitting information related to the selected viewport;
   receiving at least one track related to virtual reality (VR) content overlapping the selected viewport;
   obtaining metadata from the at least one track received; and
   rendering the selected viewport from the at least one track received, based on the received metadata and the selected viewport.

2. The method of claim 1, wherein the information related to the viewport includes viewpoint information and field-of-view (FoV) information, wherein the viewpoint information includes a center yaw angle and a center pitch angle related to spherical coordinates, and the FoV information includes a width of the yaw angle and a width of the pitch angle.

3. The method of claim 2, wherein the center yaw angle is not less than -180 degrees and not more than 180 degrees, the pitch angle is not less than -90 degrees and not more than 90 degrees, the width of the yaw angle is not less than 0 degrees and not more than 360 degrees, and the width of the pitch angle is not less than 0 degrees and not more than 180 degrees.

4. The method of claim 1, wherein the metadata includes information indicating at least one of whether the at least one track is stitched, an entire coverage range of the at least one track, whether the at least one track is a whole or part of the 360-degree image, a horizontal active range of the at least one track, a vertical active range of the at least one track, whether the at least one track is one by a platonic solid projection method, a type of the regular polyhedron, and FoV information of the at least one track.

5. The method of claim 1, wherein the at least one track includes entire geometry of the VR virtual reality content, and wherein the at least one track is generated by stitching a captured 360-degree image, projecting the stitched 360-degree image onto a two-dimensional planar surface, and splitting the projected image.

6. The method of claim 5, wherein the at least one track is generated by an equirectangular projection (ERP) method or a platonic solid projection method.

7. The method of claim 1, wherein the metadata includes information regarding dependency between one or more tracks and the at least one track overlapping the viewport, and wherein where the metadata includes information indicating the dependency between the one or more tracks and the at least one track, the method further comprises receiving the one or more tracks.

8. The method of claim 7, further comprising:

   stitching the one or more tracks and the at least one track based on the metadata;
   projecting the plurality of tracks stitched onto a two-dimensional planar surface; and
   rendering the selected viewport from the projected tracks, based on the received metadata and the selected viewport.

9. The method of claim 1, wherein the number of the at least one track is two or more, wherein the at least one track does not overlap each other, wherein the at least one track has dependency therebetween, and wherein the method further comprises:

   projecting the at least one track onto a two-dimensional planar surface; and
   rendering the selected viewport from the at least one track projected, based on the received metadata and the selected viewport.

10. The method of claim 1, wherein by a platonic solid projection method, the number of the at least one track is any one of 4, 6, 8, 12, and 20, wherein one of the at least one track corresponds to one face of the platonic solid projection method, wherein the at least one track overlaps each other, and wherein the method further comprises stitching the overlapping portions and projecting onto a two-dimensional planar surface.

11. An apparatus of processing a virtual reality image, comprising:

   a transceiver;
   a memory configured to store a virtual reality image processing module; and
   a controller connected with the transceiver and the memory to execute the virtual reality image processing module, wherein the controller is configured to select a viewport, transmitting information related to the selected viewport, receive at least one track related to virtual reality (VR) content overlapping the selected viewport, obtain metadata from the at least one track received, and render the selected viewport from the at least one track received, based on the received metadata and the selected viewport.

12. The apparatus of claim 11, wherein the controller is configured to be operated by the method of one of claims 2 to 10.

FIG.1

Sampled pixels

# FIG.2A

Sampled pixels

# FIG.2B

Sampled pixels

# FIG.2C

Rotation degree: $\theta_r = 0°, \Phi_r = 0°$

# FIG.3A

Rotation degree: $\theta_r = 0°, \Phi_r = 45°$

# FIG.3B

Rotation degree: θ $_r$=0°,Φ $_r$=90°

# FIG.3C

FIG.4

EP 3 528 212 A1

Rotation degree:
$\Theta=0°, \phi=45°$

Viewport(640x 720)

4k ERP

FIG.5

Nearest Neighbor

FIG.6A

Bi-linear

FIG.6B

FIG.6C

Bi-cubic

FIG.7

EP 3 528 212 A1

FIG.8

(a) Viewport

(b) sphere coordinate yaw and pitch

# FIG.9

(a)

(b)

Illustration of Equirectangular projection (ERP)

# FIG.10

| Projections | 3D Model | 2D Projection | Vertexes |
|---|---|---|---|
| Tetrahedron (4 faces) | | | 4 |
| Cube (6 faces) | | | 8 |
| Octahedron (8 faces) | | | 6 |
| Dedecahedron (12 faces) | | | 20 |
| Icosahedron (20 faces) | | | 12 |

FIG.11A

FIG.11B

FIG.11C

| 1 | 2 | 3 | 4 |
|---|---|---|---|
| 5 | 6 | 7 | 8 |
| 9 | 10 | 11 | 12 |
| 13 | 14 | 15 | 16 |

ver 0 ~ +90

ver 0 ~ -90

Hor 0 ~ 360

(a)

| 1 | 2 | 3 | 4 |
|---|---|---|---|
| 5 | 6 | 7 | 8 |
| 9 | 10 | 11 | 12 |
| 13 | 14 | 15 | 16 |

ver 0 ~ +90

ver 0 ~ -90

Hor 0 ~ 360

(b)

Requested "Track viewports" with respect to the "rendering viewport" (ERP image)

# FIG.12

| 5T | | | |
|---|---|---|---|
| 1F | 2R | 3b | 4L |
| 6m | | | |

(a)

| 5T | | | |
|---|---|---|---|
| 1F | 2R | 3b | 4L |
| 6m | | | |

(b)

Requested "Track viewports" with respect to the "rendering viewport" (cubical projection)

# FIG.13

(a)                    (b)                    (c)

Camera rigs for capturing 360 video.
(Each video sequence from a camera is a Track)

# FIG.14

| Tetrahedron (4 faces) | | |
| --- | --- | --- |

| Cube (6 faces) | | |
| --- | --- | --- |

| Dedecahedron (12 faces) | | |
| --- | --- | --- |

# FIG.15A          FIG.15B          FIG.15C

| 1 | 2 |
|---|---|
| 3 | 4 |

projected from

| 1 | 2 |
|---|---|
| 3 | 4 |

(a)                                        (b)

# FIG.16

| 5T | | | |
|----|----|----|----|
| 1F | 2R | 3b | 4L |
| 6m | | | |

# FIG.17A                    FIG.17B

FIG.18A

FIG.18B

## INTERNATIONAL SEARCH REPORT

International application No.

**PCT/KR2017/011262**

### A. CLASSIFICATION OF SUBJECT MATTER

*G06T 19/00(2011.01)i, G06T 19/20(2011.01)i, G06T 15/10(2006.01)i*

According to International Patent Classification (IPC) or to both national classification and IPC

### B. FIELDS SEARCHED

Minimum documentation searched (classification system followed by classification symbols)
G06T 19/00; G06F 3/048; G06T 15/60; G06T 19/20; G06F 3/14; G06F 9/44; G06F 9/455; G06T 7/00; G06T 15/10

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: virtual reality, viewport, track, rendering

### C. DOCUMENTS CONSIDERED TO BE RELEVANT

| Category* | Citation of document, with indication, where appropriate, of the relevant passages | Relevant to claim No. |
|---|---|---|
| X | QIAN, Feng et al., "Optimizing 360 Video Delivery Over Cellular Networks", In: '16 Proceedings of the 5th Workshop on All Things Cellular: Operations, Applications and Challenges, New York City, New York, 03-07 October 2016, pages 1-6. See pages 1-6; and figures 1-3. | 1-12 |
| A | US 2016-0217616 A1 (CCP HF.) 28 July 2016 See paragraphs [0093]-[0106]; and figures 8-11. | 1-12 |
| A | US 2015-0035830 A1 (ZHANG, Xiaopeng et al.) 05 February 2015 See paragraphs [0036]-[0040]; claims 1-18; and figures 1-4. | 1-12 |
| A | KR 10-2014-0020436 A (KOREA INSTITUTE OF SCIENCE & TECHNOLOGY INFORMATION) 19 February 2014 See paragraphs [0034]-[0043]; claims 1-5; and figure 2. | 1-12 |
| A | KR 10-2011-0136030 A (BIZMODELINE CO., LTD.) 21 December 2011 See paragraphs [0123]-[0139]; claims 1-4; and figures 3-5. | 1-12 |

☐ Further documents are listed in the continuation of Box C. ☒ See patent family annex.

| | | |
|---|---|---|
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| 09 JANUARY 2018 (09.01.2018) | **12 JANUARY 2018 (12.01.2018)** |

| Name and mailing address of the ISA/KR | Authorized officer |
|---|---|
| Korean Intellectual Property Office Government Complex-Daejeon, 189 Seonsa-ro, Daejeon 302-701, Republic of Korea | |
| Facsimile No. +82-42-481-8578 | Telephone No. |

Form PCT/ISA/210 (second sheet) (January 2015)

<table>
<tr><td colspan="2">**INTERNATIONAL SEARCH REPORT**<br>Information on patent family members</td><td>International application No.<br><br>**PCT/KR2017/011262**</td></tr>
</table>

| Patent document cited in search report | Publication date | Patent family member | Publication date |
|---|---|---|---|
| US 2016-0217616 A1 | 28/07/2016 | AU 2016-210884 A1<br>WO 2016-120806 A1 | 21/09/2017<br>04/08/2016 |
| US 2015-0035830 A1 | 05/02/2015 | CN 103180881 A<br>CN 103180881 B<br>US 9773343 B2<br>WO 2012-083508 A1 | 26/06/2013<br>03/08/2016<br>26/09/2017<br>28/06/2012 |
| KR 10-2014-0020436 A | 19/02/2014 | KR 10-1368177 B1 | 27/02/2014 |
| KR 10-2011-0136030 A | 21/12/2011 | KR 10-1679844 B1 | 25/11/2016 |

Form PCT/ISA/210 (patent family annex) (January 2015)